Europäisches Patentamt

European Patent Office

Office européen des brevets

(11) Publication number: **0 141 203**
**A2**

## (12) EUROPEAN PATENT APPLICATION

(21) Application number: **84111044.8**

(22) Date of filing: **17.09.84**

(51) Int. Cl.⁴: **H 04 B 17/00**
**H 04 B 9/00**

(30) Priority: **21.10.83 US 544180**

(43) Date of publication of application:
**15.05.85 Bulletin 85/20**

(84) Designated Contracting States:
**AT BE DE FR GB IT NL**

(71) Applicant: **International Business Machines Corporation**
**Old Orchard Road**
**Armonk, N.Y. 10504(US)**

(72) Inventor: **Beavers, John Andrew**
**278 N.E. 30th Street**
**Boca Raton Florida 32431(US)**

(74) Representative: **Grant, Iain Murray**
**IBM United Kingdom Patent Operations Hursley Park**
**Winchester, Hants, SO21 2JN(GB)**

(54) An anti-droop infra-red transmitter circuit.

(57) In a remote battery operated keyboard entry device coupled to a microcomputer (1) through an infra-red link, the drive transistor (10, 17) for an infra-red LED (5) is coupled to receive serial pulses representing keystrokes through a network including a visible LED (14). The arrangement is such that for each input pulse, the visible LED is turned on to provide a visible transmission indication and also an input reference potential to determine the amplitude of the current drive of the transistor through the infra-red LED to guard against data loss caused by battery droop.

FIG. 1

AN ANTI-DROOP INFRA-RED TRANSMITTER CIRCUIT

The present invention relates to an anti-droop infra-red
transmitter circuit, suitable for use in a battery powered
remote keyboard entry device coupled to a microcomputer
through an infra-red transmission link.

Many remote transmission devices include means for
indicating battery functioning.  For example, television and
hand held radio communication devices often include a push
button coupled to a LED to provide an indication of battery
power.  Other radio communications devices include an indicator, such as a LED, to indicate switching to transmit.  Here,
the indicator is coupled by the transmit switch to the power
source to indicate merely that the transmit switch has been
depressed, but not that the device is actually transmitting.
This function is normally performed separately by power meters
or standing wave ratio meters.

One problem that has been found in battery operated
transmission devices is that the transmission becomes unreliable as the battery voltage droops near the end of its life
span.  In such conditions, a normal battery indicator may well
indicate a good battery whilst transmission is intermittent.
In a keyboard entry device, this can be a significant problem
especially with intermittent data drop out at the start of
battery droop.

In accordance with the invention, there is provided a
battery driven infra-red transmitter circuit responsive to
input pulses to generate infra-red transmission pulses,
comprising an infra-red light emitting diode coupled in series
with the collector-emitter path of a drive transistor connected across the battery and having its base coupled to the source of the input pulses, characterised in that the base to pulse source connection is made through an anti-droop current maintenance network including a visible light emitting diode so connected as to be rendered conductive, with the drive transistor, in response to the input pulses and, when conducting, to provide a stabilised input reference voltage to the transistor to determine the current through the infra-red light emitting diode.

The present invention will be described further by way of example with reference to embodiments thereof as illustrated in the accompanying drawings in which:-

Figure 1 is a block diagram of a remote key entry device incorporating an infra-red transmission system for communication with a microcomputer;

Figure 2 is a diagram of one embodiment of an infra-red transmission circuit of the invention; and

Figure 3 is a diagram of a further embodiment of an infra-red transmission circuit of the invention.

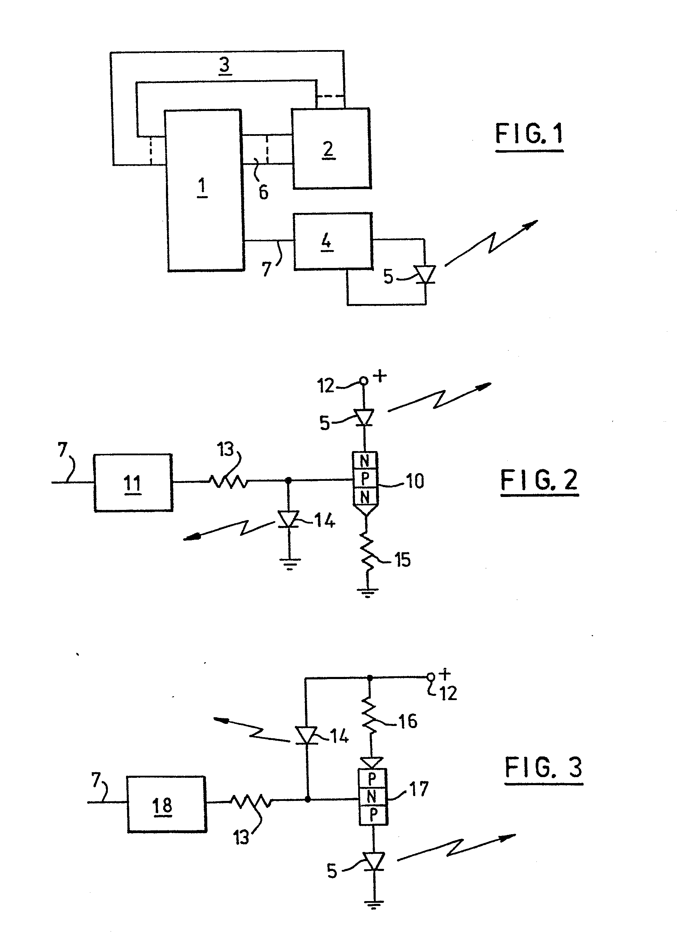

Figure 1 is a block diagram of a battery operated keyboard entry device employing an infra-red wireless transmission link to couple it to a microcomputer. The device includes a microprocessor 1 coupled to a matrix keyboard 2. Assuming the keyboard is of an 8 x 8 configuration, with 64 contacts, eight drive lines 9 from a first output port of microprocessor 1 generate signals on one or more of eight sense lines 3 in accordance with depression of the keys. It should be noted here that the drive and sense line circuits are highly simplified in Figure 1, they would, in practice include diode networks with couplings to the battery supply of the keyboard device. Sense lines 3 are coupled back to the data input port of microcomputer 1. This is programmed to produce, from each set of sense inputs representing the depression of a key in matrix 2, a series of serial signals on one output line 7 of a second output port of the microprocessor. These signals control a driver circuit 4 to energise an infra-red LED 5. As an example, each keyboard depression will result in a serial asynchronous code set comprising signals on line 7. These signals comprise a start bit, eight data bits and a parity bit. Each of these bits is represented as a series of pulses in the first half of a bit cell for a logical '1', or the second half a bit cell for a logical '0'. If each of the series of pulses in a half bit cell comprises six pulses, then each code set comprises 66 pulses on line 7 to provide 66 LED output pulses.

Figure 2 shows one embodiment of the LED drive circuit. It comprises a twin transistor logic driver 11 coupled through a resistor 13 to the base of an NPN transistor 10. This transistor is switched to drive infra-red LED 5 through its collector emitter path which also includes resistor 15. A further LED, referenced 14, is positioned in the transistor input circuit as shown. This LED is of the type which emits light in the visible spectrum.

In operation, TTL circuit 11 is effective, in response to the input pulses from the microprocessor line 7, to provide an output of ⌐ 5v or 0v to switch transistor 10 on and off respectively. With the 0v output, visible LED 14 is, of course not energised. When the TTL circuit output rises to 5v, LED 14 conducts to emit visible light, and takes most of the current from the TTL circuit through resistor 13. When conducting, LED 14 provides a fixed reference voltage to the base of transistor 10. For example, with 5v from TTL circuit 11, a potential difference of 3.3v is developed across resistor 13
and 1.4v across LED 14. Transistor 10 is a high gain transistor and is turned on by the 1.4v input to drive infra-red LED
5. The value of resistor 15 is chosen such that the 1.4v
input divides equally between the base/emitter junction of
transistor 10 and this resistor. The current through transistor 10 and, therefore, LED 5 is now determined by the value of
resistor 15. With the fixed reference input across LED 14,
the drive current through LED 5 becomes substantially independent, within limits, of the battery voltage at terminal 12.
Thus LED 14 performs two functions. Firstly it provides a
visible transmission indication, and secondly it provides a
voltage reference level to determine the operating characteristics of the infra-red LED 5 and the transistor circuit.
As the LED 5 current is now substantially independent of
battery voltage, the effect of battery voltage droop during
its working life is minimised, providing reliable operation of
the circuit for a longer period of the battery life.

Figure 3 shows a further embodiment of the infra-red
drive circuit. In this circuit, the drive transistor 17 is of
the PNP type and is placed into a conducting condition when
the output from a TTL logic circuit 18 goes from 5v to 0v. As
in the Figure 2 circuit, a resistor 13 and a visible LED 14
are coupled in the base circuit of transistor 17 to provide a
voltage reference input to this transistor and to provide a
visible indication of transmission. Lastly, a resistor 16 in
the emitter line of transistor 17 determines the current
through the transistor and, therefore, infra-red LED 5. This
current, when transistor 17 is a high gain transistor, is
substantially independent of the battery supply voltage at
terminal 12.

Thus, in summary, what has been provided is a visible transmission indicator circuit for a battery operated keyboard entry device using infra-red transmission techniques for communication with a microcomputer. The indicator is a visible LED which is coupled to the drive transistor for the infra-red LED so as to be energised with the infra-red LED. At the same time it provides an input reference voltage for the transistor driving the infra-red LED. In practice, the keyboard entry device would be a portable unit having the infra-red LED on the front so that it can be directed towards the microcomputer which must, of course, include an infra-red receiver. The visible LED would be placed on the top of the unit adjacent the keys to indicate whether or not the keyboard unit is transmitting data. If the visible LED is not energised during operation of the keyboard, the most frequent cause would, of course, be battery failure. The arrangement has the advantage that transmission problems in the keyboard show up immediately they occur, so that any long sequence of data entry can be terminated to check the keyboard.

While the invention has been particularly shown and described with reference to preferred embodiments thereof, it will be understood by those skilled in the art that various other changes in form and detail may be made without departing from the scope of the appended claims.

CLAIMS

1. A battery driven infra-red transmitter circuit responsive to input pulses to generate infra-red transmission pulses, comprising an infra-red light emitting diode (5) coupled in series with the collector-emitter path of a drive transistor (10,17) connected across the battery and having its base coupled to the source of the input pulses, characterised in that the base to pulse source connection is made through an anti-droop current maintenance network including a visible light emitting diode (14) so connected as to be rendered conductive, with the drive transistor, in response to the input pulses and, when conducting, to provide a stabilised input reference voltage to the transistor to determine the current through the infra-red light emitting diode.

2. An infra-red transmitter circuit according to claim 1 in which the network comprises a resistor directly coupled between the source of input pulses and the base of the transistor and the visible light emitting diode coupled between the base and a fixed potential.

3. An infra-red transmitter circuit according to claim 2 in which the transistor is in a series path, comprising the infra-red light emitting diode connected to the transistor collector and a further resistor connected to its emitter, coupled across a source of power, the visible light emitting diode being connected across the base of the transistor and the end of the resistor remote from the emitter.

4. An infra-red transmitter circuit according to claim 3 in which the transistor is of the NPN type, the infra-red light emitting diode is coupled between the positive terminal of the power supply and the collector of the transistor, the further resistor is coupled between the emitter of the transistor and the negative terminal of the power supply, and the visible light emitting diode is coupled between the base of the transistor and the negative terminal, the arrangement being such that the transistor and diodes are switched to a conducting condition on positive excursions of the input pulses.

5. An infra-red transmitter circuit according to claim 3 in which the transistor is of the PNP type, the infra-red light emitting diode is coupled between the negative terminal of the power supply and the collector of the transistor, the further resistor is coupled between the emitter of the transistor and the positive terminal of the power supply, and the visible light emitting diode is coupled between the base of the transistor and the positive terminal, the arrangement being such that the transistor and diodes are switched to a conducting condition on negative excursions of the input pulses.

6. A remote battery operated key entry device coupled to a microcomputer through an infra-red transmission link, comprising a microprocessor operable to produce serial digital pulse signals in response to key depressions and an infra-red transmitter circuit responsive to the pulse signals to generate infra-red transmission pulses, the transmitter circuit comprising an infra-red light emitting diode coupled in series with the collector-emitter path of a drive transistor having its base coupled to receive the pulse signals through a network including a visible light emitting diode, the visible light emitting diode being connected to conduct with the transistor in response to the pulse signals and, when conducting, to provide an input reference voltage to the transistor to maintain the current through the infra-red light emitting diode in the face of battery droop.

FIG. 1

FIG. 2

FIG. 3